# EUROPÄISCHE PATENTSCHRIFT

(11) **EP 2 269 299 B1**
(45) Veröffentlichungstag und Bekanntmachung des Hinweises auf die Patenterteilung: **30.11.2011**
(21) Anmeldenummer: 09733210.0
(22) Anmeldetag: 09.03.2009
(51) Int. Cl.: H02P 7/28, B60T 8/171, B60T 8/40, G01R 35/04, G05B 19/21, G11C 7/08

(54) **ELEKTRISCHES MOTORANSTEUERUNGSVERFAHREN MIT LASTMOMENTANPASSUNG**
ELECTRICAL MOTOR CONTROL METHOD WITH LOAD TORQUE ADAPTATION
PROCÉDÉ DE COMMANDE D'UN MOTEUR ÉLECTRIQUE AVEC ADAPTATION DU COUPLE

(30) Priorität: 15.04.2008 DE 102008018818
(43) Veröffentlichungstag der Anmeldung: 05.01.2011
(73) Patentinhaber: Continental Teves AG & Co. oHG, 60488 Frankfurt (DE)
(72) Erfinder: BARTHEL, Dieter, 63517 Rodenbach (DE); HEISE, Andreas, 64390 Erzhausen (DE); HARTMANN, Ralf, 65830 Kriftel (DE); BITSCH, Christian, 64646 Heppenheim (DE); SCHMITZ, Daniel, 53773 Hennef (DE); RICHTER, Andreas, 61267 Neu-Anspach (DE)
(74) Vertreter: Brand, Markus
(86) Internationale Anmeldenummer: PCT/EP2009/052718
(87) Internationale Veröffentlichungsnummer: WO 2009/127472

(56) Entgegenhaltungen:
- EP-A- 1 037 052
- EP-A- 1 284 540
- EP-A- 1 659 683
- DE-A1- 3 018 779
- DE-A1- 10 124 615
- US-A1- 2008 004 832

## Beschreibung

Die Erfindung betrifft ein elektrisches Motoransteuerungsverfahren gemäß Oberbegriff von Anspruch 1 und dessen Verwendung.

Die WO 01/95471 A1 beschreibt ein Verfahren zum Bestimmen der Drehstellung der Antriebswelle eines Gleichstrommotors, bei dem der Stromrippel (aktueller Stromrippel) ausgewertet wird. Hierzu wird ein geeigneter Referenzstromrippel mit dem aktuellen Stromrippel verglichen, welcher während des Betriebs des Motors gemessenen wird. Im Dokument DE 10 124 615 wird zudem über ein Toleranzband, das sich dynamisch an die Betriebszustände anpasst, die Genausgkeit und Zurerlässigkeit der Rippel-Zählung erhöht.

Aus der DE 42 32 130 A1 geht eine Schaltungsanordnung hervor, mit der in einem ABS-Bremsensteuergerät die Generatorspannung eines Gleichstrompumpenmotors während einer pulsweitenmodulierten (PWM) Ansteuerung bestimmt werden kann. Mit Hilfe der Generatorspannung wird die Förderleistung der Hydraulikpumpe geregelt. Der Stromrippel wird dabei allerdings nicht ausgewertet. Eine Auswertung der Generatorspannung zur Pumpendrehzahlbestimmung in einem ABS-Steuergerät wird auch in der DE 103 55 239 A1 beschrieben. Dabei erfolgt eine Drehzahlsteuerung mit dem Ziel, eine geräuschoptimierte Ansteuerung der Ventile zu ermöglichen. Letztlich wird auch hier eine indirekte Bestimmung des von der Pumpe erzeugten Hydraulikdrucks vorgenommen.

Die Aufgabe der vorliegenden Erfindung besteht darin, ein Motoransteuerungsverfahren, insbesondere Gleichstrommotoransteuerungsverfahren anzugeben, welches auf einfache Weise einen lastangepassten Motorstrom bereitstellt, so dass zum Beispiel eine akustisch hörbare Welligkeit von Lastschwankungen in der Motordrehzahl verringert wird.

Diese Aufgabe wird erfindungsgemäß gelöst durch das elektrische Motoransteuerungsverfahren gemäß Anspruch 1.

Bei dem elektrischen Motoransteuerungsverfahren gemäß der Erfindung wird ein elektrischer Motor, welcher vorzugsweise ein Bürstenmotor ist, von einer gepulst oder linear regelnden Stromquelle angesteuert. Je nach aktueller, während einer bestimmten Winkelposition des Motors an der Welle anliegenden, Last ergibt sich für einen bestimmten Pumpenstrom in Abhängigkeit von der Konstruktion des Motors eine bestimmte Motordrehzahl. Das Lastdrehmoment während einer Motorumdrehung ist allerdings nicht konstant, da der Motor über die Motorwelle mit einer winkelabhängigen Last verbunden ist. Die Last weist also ein von der Rotorlage abhängiges Drehmoment (Drehmomentprofil) auf. Aus dem am Motor anliegenden Spannungspotential (zum Beispiel Kommutatorspannung) und/oder dem Motorstrom wird ein Welligkeitssignal erzeugt und ausgewertet.

Nach dem Verfahren wird bevorzugt daraus auch die Drehzahl des Motors bestimmt. Es ist besonders bevorzugt vorgesehen, dass mit dem Welligkeitssignal auch die Drehzahl des Motors geregelt wird. Nach dem erfindungsgemäßen Verfahren wird nun nach Maßgabe des Welligkeitssignals und ggf. anderer Größen, wie zum Beispiel dem bekannten Lastprofil der Last, die Motorleistung während einer Motorumdrehung so (geeignet) variiert, dass die Winkelgeschwindigkeit während einer Motorumdrehung an die Anforderung angepasst wird, insbesondere damit die Drehzahlschwankungen möglichst gering sind und/oder die Periodenabweichungen des Welligkeitssignals während einer Motorumdrehung möglichst gering sind und/oder damit die Geräuschentwicklung des Gesamtaggregats, in das der Motor eingebaut ist, möglichst gering ist.

Bevorzugt wird an Hand von 360°-Drehmomentverlaufskenngrößen der Last (z.B. Lastprofil) und dem Welligkeitssignal ein 360°-Motorstromansteuerungsprofil (Ansteuerungsprofil) erzeugt, mit dem eine an den Drehmomentverlauf der Last angepasste Stromansteuerung des Motors über zumindest eine Motorumdrehung hinweg durchgeführt wird.

An Hand von Pumpenkenngrößen und dem Welligkeitssignal oder der Drehzahl wird bevorzugt, insbesondere während einer Lernphase, ein Motorstromansteuerungsprofil ermittelt, mit dem eine dem Drehmomentverlauf angepasste Stromansteuerung des Motors über mindestens eine Motorumdrehung hinweg durchgeführt wird. Hierdurch ist es möglich, die Drehzahl des Motors auch bei variierendem Lastmoment möglichst konstant zu halten. Selbstverständlich wäre es auch denkbar, ein anderes Stromprofil (zum Beispiel ein den ungleichmäßigen Lauf verstärkendes Stromprofil) aufzuprägen, falls dies für eine denkbare Verwendung des vorliegenden Verfahrens sinnvoll erscheint.

Wie bereits erwähnt, kann die Drehzahl des Motors aus dem am Motor anliegenden Spannungspotential und/oder dem Motorstrom bestimmt werden. Eine weitere Besonderheit der hier beschriebenen bevorzugten Ausführungsform ist, dass im Bereich der elektronischen Kraftfahrzeugbremssysteme eine Bestimmung der Drehzahl eines eine Pumpe antreibenden Gleichstrommotors an Hand einer Auswertung der Welligkeit des Motorstroms (Kommutierungsrippel) ermöglicht wird. Die Kommutierung bei Gleichstrommotoren (Bürstenmotor) verursacht eine Welligkeit im Versorgungsstrom. Die Grundfrequenz dieser Wellen (Rippelfrequenz) steht in direktem Zusammenhang mit der Motordrehzahl, so dass mit Hilfe des Rippels eine äußerst feinfühlige Drehzahlerkennung möglich ist. Bevorzugt wird das gemessene Spannungspotential und/oder der Motorstrom in ein Digitalsignal umgewandelt, in welchem insbesondere der Pulsabstand ein Maß für die gemessene Drehzahl ist. Die Umwandlung kann zweckmäßig unter Verwendung eines Schmitt-Triggers erfolgen, dem besonders zweckmäßig ein Verstärker vorgeschaltet ist.

Wenn der Gleichstrommotor getaktet, zum Beispiel über eine Pulweitenmodulationsschaltung (PWM), angesteuert wird, was bevorzugt ist, so tritt der oben beschriebene Stromrippel sowohl während der Einschaltphase als auch während der Ausschaltphase auf. Es ist möglich, den Stromrippel nur während einer dieser Phasen durch entsprechende Auslegung der elektronischen Schaltungsanordnung zu berücksichtigen. Bevorzugt wird jedoch der Stromrippel während der Anschaltphase und der Ausschaltphase berücksichtigt. Dies ist insbesondere dadurch möglich, dass das Signal während der genannten Phasen zunächst getrennt bestimmt und dann über eine Anpassungsschaltung wieder zu einem gemeinsamen Signal zusammengesetzt wird. Hierzu wird besonders bevorzugt ein analoger Multiplexer eingesetzt, welcher die beiden vorher auf gleiche Spannung normierten Signale in geeigneter Weise auf die Auswerteschaltung aufschaltet.

Der auf diese Weise bestimmte Stromrippel kann dann für das Verfahren gemäß der Erfindung herangezogen werden. Bevorzugt werden hierzu die Pulsabstände im Digitalsignal bestimmt. Die Pulsabstände geben mehr oder weniger genau die Periodenabweichungen des Welligkeitssignals während einer Motorumdrehung wieder und sind somit ein Maß für die Konstanz der Winkelgeschwindigkeit des Motors während einer 360°-Motorumdrehung. Aus den Pulsabständen lässt sich dann bevorzugt der Zeitpunkt einer Lastschwankung während einer Motorumdrehung bestimmen. Nach Maßgabe dieses Zeitpunkts, zum Beispiel des Zeitpunkts mit der größten Lastschwankung, wird dann die Phasenlage des Motorstromansteuerungsprofils bezüglich einer Motorumdrehung festgelegt.

Vorzugsweise wird das Digitalsignal mit Hilfe eines Input-Capture-Registers eines Mikrocontrollers eingelesen. Ein geeigneter Algorithmus nimmt dann innerhalb des Mikrocontrollers eine Auswertung des Digitalsignals vor. Eine elektronische Verarbeitung des Digitalsignals mit diskreten elektronischen Bauelementen ist ebenfalls möglich.

Das Motorprofil kann prinzipiell sehr fein an das Lastprofil angepasst werden. In der Praxis wird diese Genauigkeit aber recht selten benötigt werden. Es hat sich daher als besonders zweckmäßig erwiesen, während einer Winkelposition der Motorachse bzw. des Rotors mit erhöhter Last die Motorleistung um einen vorgegebenen Offsetwert für eine bestimmte Zeitspanne zu erhöhen, so dass sich ein rechteckförmiger Verlauf des Ansteuerstroms um den Bereich mit der größten Lastschwankung ergibt.

Gemäß einer weiteren bevorzugten Ausführungsform des erfindungsgemäßen Verfahrens weist der Rotor mindestens eine am Kommutierungssignal messbare elektrische Rotorveränderung in einem Winkelbereich auf, welche eine Markierung einer oder mehrerer Winkellagen erlaubt. Mit Hilfe der Markierung ist es möglich, auch ganz ohne eine erkennbare, vom Drehmomentverlauf verursachte, Variation im Welligkeitssignal oder einen zusätzlichen Positionssensor die Rotorposition mit der erforderlichen Genauigkeit zu bestimmen und den Motor bei bekanntem Drehmomentverlauf lastabhängig anzusteuern.

Die Rotorveränderung besteht vorzugsweise darin, dass
a) zumindest eine der Kommutatorlamellen des am Rotor angebrachten Teil des Kommutators gegenüber den übrigen Kommutatorlamellen verändert ist, insbesondere
   aa) in dem diese (Lamelle) aus einem anderen Material besteht und/oder
   ab) diese bezüglich des Kommutatorumfangs eine veränderte Länge aufweist und/oder
   ac) diese eine andere Winkellage aufweist, und/oder
b) das Wickelschema oder die Windungszahl der auf dem Rotoranker aufgebrachten Windungssegmente winkelabhängig variiert wird.

Eine Änderung des Wickelschemas kann beispielsweise in der Weise vorgenommen werden, dass eine der Rotorspulen mit einer gegenüber den anderen Rotorspulen geänderten Windungszahl bewickelt ist. Wird diese Rotorveränderung beispielsweise bei einem DC-Motor mit zwei Polpaaren und n Nuten im Kommutator vorgenommen, entstehen hierdurch im Abstand von 180° zwei gegenüber den übrigen n-2 Kommutierungsrippeln signifikant veränderte Strompeaks. Andererseits würden bei einem DC-Motor mit 4 Polpaaren und n Nuten im Kommutator die veränderten Strompeaks in einem Abstand von 90° entstehen (vier gegenüber den n-4 Kommutierungsrippeln signifikant veränderte Strompeaks).

Wenn die zur Markierung verwendete Kommutatorlamelle aus einem anderen Material besteht, besitzt diese einen anderen elektrischen Widerstand als die übrigen Lamellen. Auf Grund dieses veränderten elektrischen Verhalten ist somit eine Markierung der Winkelposition möglich.

Nach einer weiteren bevorzugten Ausführungsform des Verfahrens wird der Rotor des Motors gegenüber der Pumpenwelle so ausgerichtet, dass sich bezüglich der Winkelposition des Rotors und damit der Winkellage der zumindest einen Rotorveränderung eine definierte Winkellage ergibt.

Besonders bevorzugt wird die Winkellage so eingestellt und die Rotorveränderung so vorgenommen, dass die sich durch die Rotorveränderung ergebende Drehmomentänderung die vorhandene Lastschwankungen der Last automatisch ausgleicht. Dies bietet den Vorteil, dass eine zum Drehmoment passende, winkelabhängige Variation des Motordrehmoments ohne eine spezielle elektronische Motoransteuerung vorgenommen werden kann.

Bevorzugt handelt es sich bei der Last um eine Hydraulikpumpe und die zuvor beschriebene Winkellageneinstellung wird so vorgenommen, dass eine gleichmäßigere Förderung des Hydraulikfluids und/oder eine Geräuschminderung des Motorpumpenaggregats erzielt wird.

Die Erfindung bezieht sich weiterhin auch auf ein Verfahren, bei dem das auf die zuvor beschriebene Weise gewonnene Motorpositionssignal zur davon abhängigen Ansteuerung eines Fluidventils, insbesondere Hydraulikventils, ganz besonders bevorzugt analog angesteuertes Hydraulikventil genutzt wird. Hierdurch ist es möglich, Druckschwankungen im Hydrauliksystem auszugleichen, die durch eine ungleichmäßige Pumpenförderung hervorgerufen sind

Die Erfindung bezieht sich außerdem auf die Verwendung des vorstehend beschriebenen Verfahrens in einem elektronischen Bremsenregelungssystem (z.B. ABS, ESP, ASR, EBC etc.). Bevorzugt bezieht sich die Erfindung auf eine Blockierschutzregelung und/oder eine Raddruckregelung, insbesondere innerhalb eines Abstandsregelungssystems (ACC), wo sich die erfindungsgemäß vermiedenen Druckschwankungen bzw. Geräusche der Pumpe in besonders unerwünschter Weise auswirken können. Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine Schaltungsanordnung zur Bereitstellung eines digitalisierten Stromrippelsignals,
- Fig. 2: den zeitlichen Verlauf des digitalgewandelten Rippelsignals ohne und mit Last (ohne Anwendung des erfindungsgemäßen Verfahrens),
- Fig. 3: verschiedene Signalverläufe bei Anwendung des erfindungsgemäßen Verfahrens,
- Fig. 4: Beispiele für markierte Rotoren in schematischer Darstellung,
- Fig. 5: einen Widerstandsverlauf für den Wicklungswiderstand des Rotors in Fig. 4,
- Fig. 6: ein Beispiel für die Ausrichtung der Motorwelle in Bezug auf die Ausrichtung des Exzenters einer Pumpe und
- Fig. 7: eine Darstellung des 360°-Drehmomentverlaufs einer Exzenter-Zweikolbenpumpe.

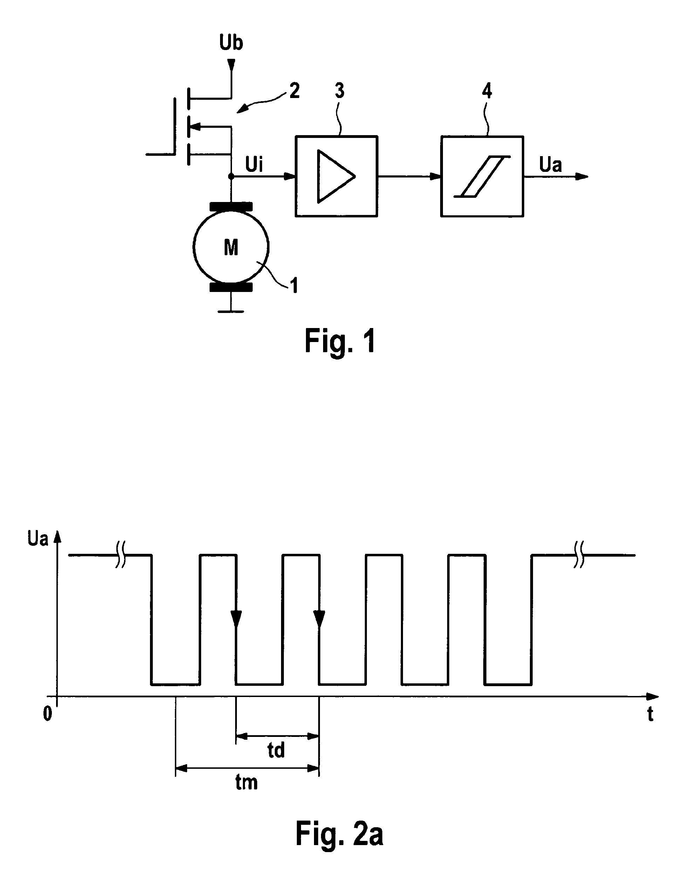

Wie in Fig. 1 dargestellt, wird Motor 1 getaktet von einer PWM-Ansteuerung eines elektronischen Bremssystems angesteuert. FET 2 ist hierzu als High-Side-Schalter zwischen die Pole einer Gleichspannungsversorgung und Motor 1 geschaltet. An dem FET 2 zugewandten Motoranschluss des Motors 1 wird die Spannung Uᵢ abgegriffen, welche auf Grund des Kommutators des Motors eine drehzahlabhängige Welligkeit aufweist. Spannung Ui wird Operationsverstärker 3 zugeführt. Das von Operationsverstärker 3 verstärkte Signal wird von einem Schmitt-Trigger 4 in ein rechteckförmiges Digitalsignal umgewandelt.

Das Diagramm in Fig. 2a) zeigt das Signal am Ausgang des Schmitt-Triggers 4. Das Signal hat einen rechteckförmigen Verlauf und wechselt zwischen 0 und 5 V. Die Abstände der Flanken td variieren in Abhängigkeit der Winkelgeschwindigkeit der Motorwelle.

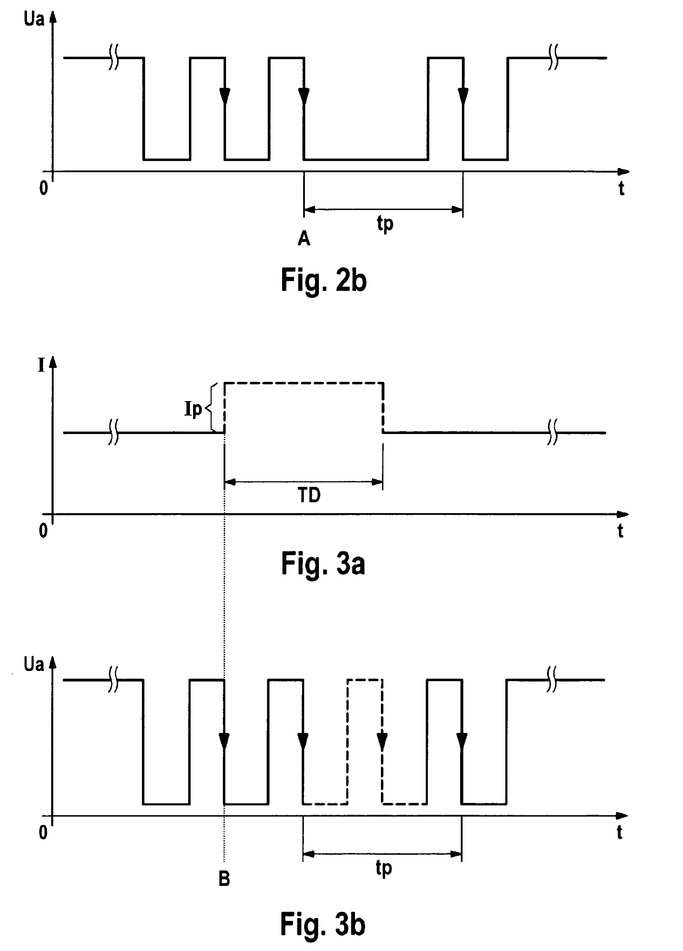

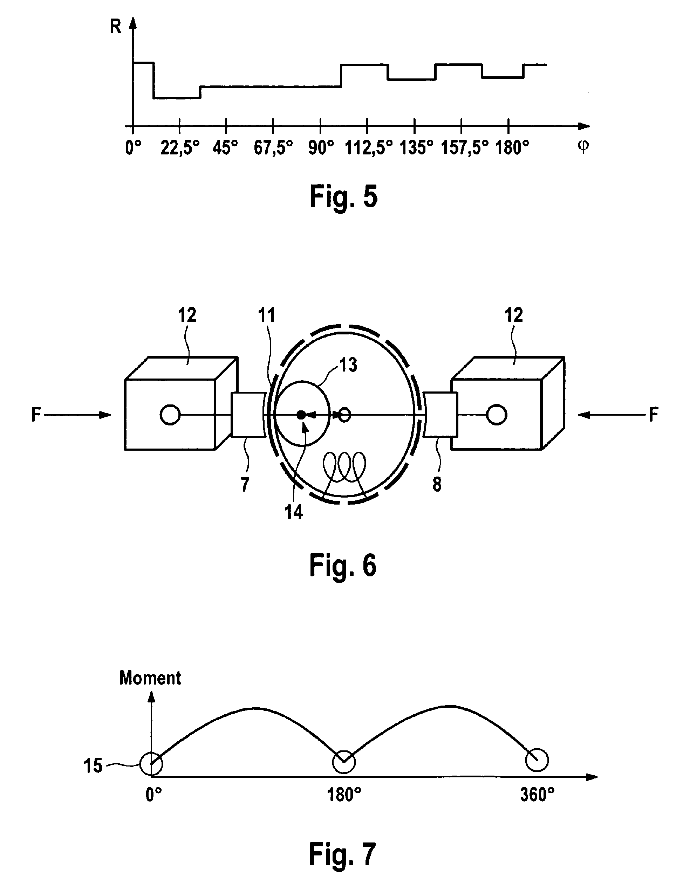

Der Bürstenmotor 1, von dem das Pulssignal in Fig. 2b) stammt, ist mit der Pumpe des Hydrauliksystems einer ABS-Bremsenregelung verbunden. Bei der Pumpe handelt es sich um eine über eine Welle angetriebene Exzenter-Kolbenpumpe, wie in Fig. 6 dargestellt, die auf Grund Ihrer nicht symmetrischen Konstruktion im Förderbetrieb unter Last relativ hohe Drehmomentschwankungen pro Umdrehung der Pumpenwelle aufweist. Diese während des Pumpenbetriebs vorliegenden Lastschwankungen sind akustisch wahrnehmbar. Wie dem zeitlichen Verlauf des Signal Uₐ in Fig. 2b) entnommen werden kann, ist der Flankenabstand innerhalb des mit tp bezeichneten Bereichs erheblich größer, als der Abstand der übrigen Flanken. Zu diesem Zeitpunkt liegt ein besonders hohes Drehmoment an der Pumpenwelle an, so dass die Motordrehzahl in diesem Bereich einbricht. Je nach Konstruktionsprinzip der Pumpe treten solche Drehzahleinbrüche pro Wellenumdrehung ein oder mehrfach auf.

Das Digitalsignal in Fig. 2 wird mit Hilfe eines Input-Capture-Registers eines Mikrocontrollers eingelesen. Ein geeigneter Algorithmus innerhalb des Mikrocontrollers nimmt eine Auswertung des Digitalsignals vor, bei der der Zeitpunkt A (Fig. 2b) ermittelt wird, von dem an der Lasteinbruch beginnt (im dargestellten Beispiel der Beginn der ersten großen Pulspause). In Abhängigkeit von Zeitpunkt A wird dann ein Vorlaufzeitpunkt B bestimmt, welcher eine bestimmte Zeitspanne Tᵥ vor dem Zeitpunkt B liegt.

Wie in Fig. 3a) dargestellt, wird zum Zeitpunkt B der Motorstrom um einen bestimmten Betrag I_{P} erhöht. Nach Ablauf der Zeit T_{D} wird der Motorstrom wieder auf den von der Bremsenregelung vorgegebenen Wert verringert. Die Bemessung der Werte I_{P}, T_{D} und T_{V} hängt von der Konstruktion der Pumpe, des Motors und der Hydraulik ab. Die Werte lassen sich zum Beispiel durch Messreihen ermitteln. Eine andere Möglichkeit zur Ermittlung der obigen Kompensationsparameter besteht darin, dass zunächst eine Lernphase durchgeführt wird, in der geeignete Werte für die spätere Kompensationsphase ermittelt werden. Fig. 3b) stellt das digitalisierte Drehzahlsignal Uₐ während der Motorbetriebsphase dar, bei der die oben beschriebene Motorsegmentlastkompensation durchgeführt wird. Im beispielgemäßen Anwendungsfall der Hydraulikpumpe lassen sich die weiter oben beschriebenen Schwankungen der Flankenabstände deutlich reduzieren. Hierdurch wird ein gleichmäßigerer Motorlauf und ein merklich geringeres Betriebsgeräusch der Hydraulikpumpe erreicht.

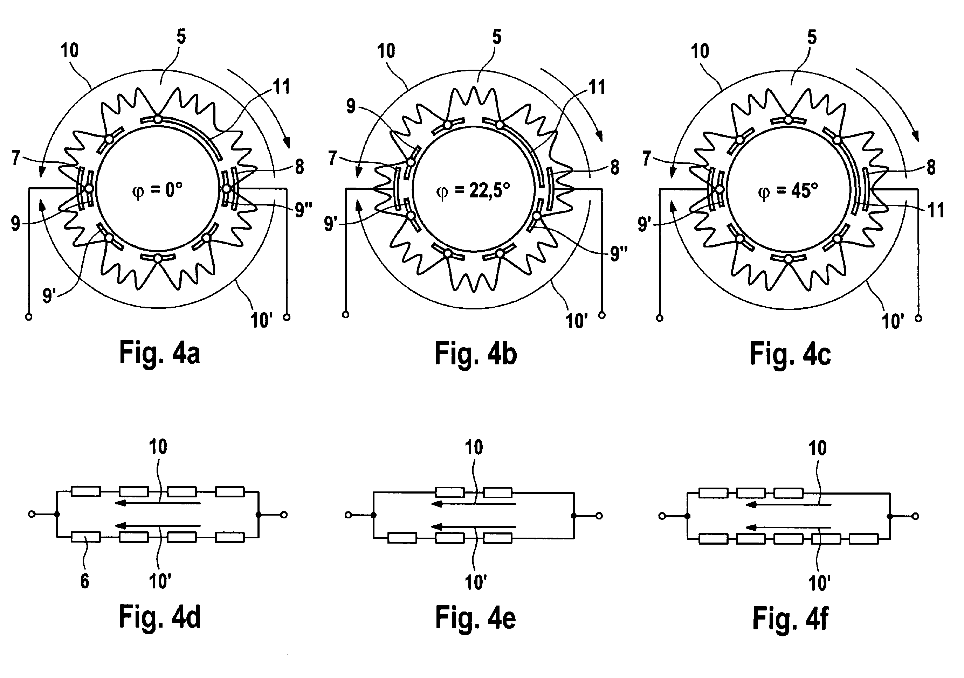

In Fig. 4 sind drei Winkelpositionen (ϕ = 0°,ϕ= 22,5°, ϕ = 45°) eines schematisierten Rotors dargestellt bei dem innerhalb des Kollektors eine Lamelle gegenüber den übrigen Lamellen des Kollektors bezüglich des Kommutatorumfangs erheblich verbreitert ausgeführt ist (im dargestellten Beispiel doppelte Breite). Jeweils darunter sind Widerstandsersatzschaltbilder dargestellt, in denen ein Widerstandssymbol 6 ein stromdurchflossenes Wicklungssegment des Rotors symbolisiert. Zum Betrieb des Motors liegt an den Bürstenkontakten 7 und 8 eine Spannung an.

Wie in Teilbild a) von Fig. 4 gezeigt, stehen die Bürstenkontakte 7 und 8 mit jeweils einer Kollektorlammele 9 und 10 in Kontakt, so dass ein Strom durch die Wicklung des Rotors fließen kann. Entsprechend dem Ersatzschaltbild in Teilbild d) teilt sich der Strom 10, 10' auf zwei Wicklungspfade mit gleichem Widerstand auf.

In Teilbild b) bei einer Winkellagen ϕ = 22,5° schließt Bürstenkontakt 7 die Lamellen 9 und 9' kurz bzw. Kontakt 8 die Lamellen 9" und 11. Kollektorlamelle 11 ist doppelt so breit wie die übrigen Lamellen 9. Es ergibt sich das in Teilbild e) dargestellte Ersatzschaltbild für die Wicklungswiderstände. Strompfad 10 weist bei ϕ = 22,5° einen geringeren Widerstand auf als Strompfad 10'.

In Teilbild c) bei einer Winkellage ϕ = 45° steht Bürstenkontakte 7 mit Kollektorlammele 9' in Kontakt. Bürstenkontakt 8 stellt einen Kontakt mit der breiteren Lamelle 11 her. Es ergibt sich das in Teilbild f) dargestellte Ersatzschaltbild für die Wicklungswiderstände. Strompfad 10 weist bei ϕ = 22,5° einen geringeren Widerstand auf als Strompfad 10'. Der Gesamtwiderstand ist höher als bei ϕ = 45°, jedoch niedriger als bei ϕ = 0°.

Zur weiteren Verdeutlichung ist in Fig. 5 der Gesamtwiderstand R der Rotorwindungen winkelabhängig für eine halbe Rotorumdrehung (180°) dargestellt.

Die Darstellung eines Motorpumpenaggregats zeigt Fig. 6. Die Pumpe umfasst zwei stark schematisiert darstellte Pumpenkolben 12, über die im Förderbetrieb eine Kraftkomponente F in Richtung des Exzenters wirkt. Durch die exzentrische Lage des Kreismittelpunktes 14 von Kreis 13 wird die Winkelposition des Exzenters bezüglich der Pumpenwelle symbolisiert. In der dargestellten Winkellage steht die breitere Lamelle 11 des Kollektors der linken Motorbürste 7 gegenüber. In dieser Lage fluchtet das Widerstandsminima der Rotorwicklung mit dem Totpunkt des winkelabhängigen Pumpenmoments, so dass eine Geräuschminderung auch ohne Leistungsregelung erzielt wird.

In Fig. 7 ist der 360°-Drehmomentverlauf der Exzenter-Zweikolbenpumpe in Fig. 6 dargestellt. Die Markierungen 15 symbolisieren die Winkellagen des Kollektors, bei denen die breitere Lamelle 11 einem Bürstenelement 7 oder 8 gegenübersteht. Wie aus Fig. 7 erkennbar ist, ist dies bei geeigneter Ausrichtung von Pumpenwelle zu Kommutator immer dann der Fall, wenn das Drehmoment an der Pumpenwelle einen Minimalwert (Totpunkte des Exzenters) annimmt. Durch das mechanische Ausrichten der modifizierten Kommutatorlamelle kann somit auch bei asymmetrischen Drehmomentverläufen (z.B. wenn die beiden Kolben der Pumpe gegen einen unterschiedlichen Druck arbeiten) ein Gleichlauf erzielt werden.

## Patentansprüche

1. Elektrisches Motoransteuerungsverfahren, bei dem ein Elektromotor, bestehend aus einem mit einer Motorwelle verbundenen Rotor und einem Stator mit Bürsten, welcher für die Kommutierung der auf dem Rotor angeordneten Wicklungen mehrere Kommutatorlamellen umfasst, und der Elektromotor von einer gepulst oder linear regelbaren Stromquelle angesteuert wird, wobei die Motorwelle mit einer radial angetriebenen Last, insbesondere Pumpe verbunden ist, welche über eine Motorumdrehung einen nicht linearen Drehmomentverlauf aufweist, wobei aus einem am Motor anliegenden Spannungspotential und/oder dem Motorstrom ein Welligkeitssignal gewonnen wird und aus dessen Verlauf eine Rotorpositionsinformation erhalten wird, **dadurch gekennzeichnet, dass**
die Motorleistung während einer Motorumdrehung so variiert wird, dass die Periodenabweichungen des Welligkeitssignals, und damit die winkelgeschwindigkeit, während einer Motorumdrehung an die Anforderung der last angepasst wird, insbesondere damit die Drehzahlschwankungen und/oder die Geräuschentwicklung möglichst gering sind/ist.

2. Verfahren nach Anspruch 1, **dadurch gekennzeichnet, dass** an Hand von 360°-Drehmomentverlaufskenngrößen der Last und dem Welligkeitssignal ein 360°-Motorstromansteuerungsprofil erzeugt wird, mit dem eine an den Drehmomentverlauf der Last angepasste Stromansteuerung des Motors über eine Motorumdrehung hinweg durchgeführt wird.

3. Verfahren nach mindestens einem der Ansprüche 1 bis 2, **dadurch gekennzeichnet, dass** das Welligkeitssignal in ein Digitalsignal umgewandelt wird, in welchem insbesondere der Pulsabstand ein Maß für die gemessene Drehzahl ist.

4. Verfahren nach Anspruch 3, **dadurch gekennzeichnet, dass** durch Ausmessen von Pulsabständen der Zeitpunkt einer Lastschwankung bestimmt wird und die Phasenlage des Motorstromansteuerungsprofils bezüglich einer Motorumdrehung nach Maßgabe dieses Zeitpunkts bestimmt wird.

5. Verfahren nach mindestens einem der Ansprüche 1 bis 4, **dadurch gekennzeichnet, dass** während einer Winkelposition der Motorachse mit hohem Drehmomentbedarf der Motorstrom um einen vorgegebenen Offsetwert für eine bestimmte Zeitspanne erhöht wird, so dass sich ein rechteckförmiger Verlauf des Ansteuerstroms ergibt.

6. Verfahren nach mindestens einem der Ansprüche 1 bis 5, **dadurch gekennzeichnet, dass** die Last eine Hydraulikpumpe in einem elektronischen Kraftfahrzeugbremssystem ist.

7. Verfahren nach mindestens einem der Ansprüche 1 bis 6, **dadurch gekennzeichnet, dass** der Rotor mindestens eine am Kommutierungssignal messbare elektrische Rotorveränderung in einem Winkelbereich aufweist, welche eine Markierung einer oder mehrere Winkellagen erlaubt.

8. Verfahren nach Anspruch 7, **dadurch gekennzeichnet, dass** die Rotorveränderung darin besteht, dass
a) zumindest eine der Kommutatorlamellen des am Rotor angebrachten Teil des Kommutators gegenüber den übrigen Kommutatorlamellen verändert ist, insbesondere
aa) in dem diese aus einem anderen Material besteht und/oder
ab) diese bezüglich des Kommutatorumfangs eine veränderte Länge aufweist und/oder
ac) diese eine andere Winkellage aufweist, und/oder
b) das Wickelschema oder die Windungszahl der auf dem Rotoranker aufgebrachten Windungssegmente winkelabhängig variiert wird.

9. Verfahren nach Anspruch 7 oder 8, **dadurch gekennzeichnet, dass** der Rotor des Motors gegenüber der Pumpenwelle so ausgerichtet wird, dass sich bezüglich der Winkelposition des Rotors und damit der Winkellage der zumindest einen Rotorveränderung eine definierte Winkellage ergibt.

10. Verfahren nach Anspruch 9, **dadurch gekennzeichnet, dass** die Winkellage so eingestellt und die Rotorveränderung so vorgenommen wird, dass sich die durch die Rotorveränderung ergebende Drehmomentänderung und die vorhandene Lastschwankungen der Last automatisch ausgleicht.

11. Verfahren nach Anspruch 10, **dadurch gekennzeichnet, dass** die Last eine Hydraulikpumpe ist und die Winkellageneinstellung so vorgenommen wird, dass eine gleichmäßigere Förderung des Hydraulikfluids und/oder eine Geräuschminderung erzielt wird.

12. Verwendung des Verfahrens nach mindestens einem der Ansprüche 1 bis 11 in einem elektronischen Bremsenregelungssystem.

## Claims

1. Electrical motor drive method, in which an electric motor comprising a rotor, which is connected to a motor shaft, and a stator, which has brushes and comprises a plurality of commutator laminations for commutating the windings arranged on the rotor, is driven by a pulsed or linearly controllable power source, with the motor shaft being connected to a radially driven load, in particular a pump, which has a non-linear torque profile over a revolution of the motor, wherein a ripple signal is obtained from a voltage potential which is applied to the motor and/or from the motor current, and rotor position information is acquired from the profile of said ripple signal, **characterized in that** the motor power is varied during a revolution of the motor such that the period deviations in the ripple signal, and therefore the angular velocity, during a revolution of the motor are matched to the demand of the load, in particular so that the fluctuations in rotation speed and/or the development of noise are/is as low as possible.

2. Method according to Claim 1, **characterized in that** a 360° motor current drive profile is generated on the basis of 360° torque profile characteristic variables of the load and the ripple signal, said motor current drive profile being used to drive the current of the motor, in a manner adapted to the torque profile of the load, over a revolution of the motor.

3. Method according to at least one of Claims 1 to 2, **characterized in that** the ripple signal is converted into a digital signal in which, in particular, the pulse spacing is a measure of the measured rotation speed.

4. Method according to Claim 3, **characterized in that** the time of a fluctuation in load is determined by measuring pulse spacings, and the phase angle of the motor current drive profile is determined with respect to a revolution of the motor in accordance with said time.

5. Method according to at least one of Claims 1 to 4, **characterized in that** the motor current is increased by a predefined offset value for a specific time period at an angular position of the motor axis with a high torque requirement, so that a rectangular profile of the drive current is produced.

6. Method according to at least one of Claims 1 to 5, **characterized in that** the load is a hydraulic pump in an electronic motor vehicle brake system.

7. Method according to at least one of Claims 1 to 6, **characterized in that** the rotor exhibits at least one electrical rotor change, which can be measured at the commutation signal, in an angular region, this rotor change allowing one or more angular positions to be marked.

8. Method according to Claim 7, **characterized in that** the rotor change involves
a) at least one of the commutator laminations of that part of the commutator which is mounted on the rotor being changed in relation to the other commutator laminations, in particular
aa) by said commutator lamination being composed of a different material and/or
ab) said commutator lamination having a changed length with respect to the commutator circumference and/or
ac) said commutator lamination having a different angular position,
and/or
b) the winding pattern or the number of turns of the turn segments fitted on the rotor armature being varied as a function of the angle.

9. Method according to Claim 7 or 8, **characterized in that** the rotor of the motor is oriented in relation to the pump shaft such that it has a defined angular position with respect to the angular position of the rotor and therefore the angular position of the at least one rotor change.

10. Method according to Claim 9, **characterized in that** the angular position is set and the rotor change is performed such that the change in torque produced by the rotor change automatically compensates for the existing fluctuations in load.

11. Method according to Claim 10, **characterized in that** the load is a hydraulic pump and the angular position is set such that a more uniform delivery of the hydraulic fluid and/or a reduction in noise are/is achieved.

12. Use of the method according to at least one of Claims 1 to 11 in an electronic brake control system.

## Revendications

1. Procédé de commande de moteur électrique, dans lequel un moteur électrique, constitué d'un rotor relié à un arbre de moteur et d'un stator avec des balais, qui comprend pour la commutation des enroulements disposés sur le rotor plusieurs lamelles de commutateur, et le moteur électrique est commandé par une source d'alimentation électrique pouvant être régulée par impulsions ou linéairement, dans lequel l'arbre de moteur est relié à une charge entraînée radialement, notamment une pompe, qui présente une courbe de couple de rotation non linéaire sur une révolution du moteur, dans lequel un signal d'ondulation est extrait d'un potentiel de tension appliqué au moteur et/ou du courant de moteur et une information de position de rotor est obtenue d'après cette courbe,
**caractérisé en ce que**
la puissance du moteur pendant une révolution du moteur est variée de telle sorte que les écarts de période du signal d'ondulation et donc la vitesse angulaire pendant une révolution du moteur soient adaptés à l'exigence de la charge, notamment afin que les fluctuations de régime de rotation et/ou le développement de bruit soit/soient le plus minime possible.

2. Procédé selon la revendication 1, **caractérisé en ce que**, à l'aide de grandeurs caractéristiques de courbe de couple de rotation à 360° de la charge et du signal d'ondulation, un profil de commande de courant du moteur à 360° est généré, avec lequel une commande de courant du moteur adaptée à la courbe de couple de rotation de la charge est entreprise sur une révolution du moteur.

3. Procédé selon au moins une des revendications 1 et 2, **caractérisé en ce que** le signal d'ondulation est converti en un signal numérique, dans lequel notamment l'intervalle entre impulsions est un étalon du régime de rotation mesuré.

4. Procédé selon la revendication 3, **caractérisé en ce que**, en mesurant les intervalles entre impulsions, le point temporel d'une fluctuation de charge est déterminé et la relation de phase du profil de commande de courant du moteur par rapport à une révolution du moteur est déterminé conformément à ce point temporel.

5. Procédé selon au moins une des revendications 1 à 4, **caractérisé en ce que** pendant une position angulaire de l'axe de moteur avec un besoin élevé en couple de rotation, le courant de moteur est augmenté d'une valeur de décalage prescrite pour une plage horaire déterminée, de telle sorte qu'une courbe de forme rectangulaire du courant de commande en résulte.

6. Procédé selon au moins une des revendications 1 à 5, **caractérisé en ce que** la charge est une pompe hydraulique dans un système de freinage de véhicule automobile électronique.

7. Procédé selon au moins une des revendications 1 à 6, **caractérisé en ce que** le rotor présente au moins une variation de rotor électrique pouvant être mesurée sur le signal de commutation dans un champ angulaire, qui permet un marquage d'une ou plusieurs positions angulaires.

8. Procédé selon la revendication 7, **caractérisé en ce que** la variation de rotor consiste **en ce que**
a) au moins une des lamelles de commutateur de la partie du commutateur montée sur le rotor est variée par rapport au reste des lamelles de commutateur, notamment
aa) du fait que celle-ci est constituée d'un autre matériau, et/ou
ab) celle-ci présente par rapport à la circonférence de commutateur une longueur modifiée, et/ou
ac) celle-ci présente une autre position angulaire, et/ou
b) le schéma angulaire ou le nombre de spires des segments de spire montés sur l'ancre de rotor est varié en fonction de l'angle.

9. Procédé selon la revendication 7 ou 8, **caractérisé en ce que** le rotor du moteur est conçu par rapport à l'arbre de pompe de telle sorte que, par rapport à la position angulaire du rotor et donc la position angulaire de l'au moins une variation de rotor, une position angulaire définie soit obtenue.

10. Procédé selon la revendication 9, **caractérisé en ce que** la position angulaire est réglée et la variation de rotor est entreprise de telle sorte que la modification de couple de rotation résultant de la variation de rotor compense automatiquement les fluctuations de charge présentes.

11. Procédé selon la revendication 10, **caractérisé en ce que** la charge est une pompe hydraulique et le réglage de la position angulaire est entrepris de telle sorte qu'un transport plus uniforme du fluide hydraulique et/ou une réduction du bruit soient obtenus.

12. Utilisation du procédé selon au moins une des revendications 1 à 11 dans un système de réglage de freins électronique.
